# EUROPÄISCHE PATENTSCHRIFT

(11) **EP 2 034 824 B1**
(45) Veröffentlichungstag und Bekanntmachung des Hinweises auf die Patenterteilung: **12.06.2013**
(21) Anmeldenummer: 07725966.1
(22) Anmeldetag: 12.06.2007
(51) Int. Cl.: A01N 25/02, A01N 25/04, A01N 25/30, A01N 57/20, A01P 13/00

(54) **SCHAUMARME ZUBEREITUNGEN FÜR DEN PFLANZENSCHUTZ**
LOW-FOAMING PREPARATIONS FOR CROP PROTECTION
PRÉPARATIONS PHYTOSANITAIRES PEU MOUSSANTES

(30) Priorität: 21.06.2006 EP 06012771
(43) Veröffentlichungstag der Anmeldung: 18.03.2009
(60) Teilanmeldung: 11165151.9
(73) Patentinhaber: Bayer CropScience AG, 40789 Monheim (DE)
(72) Erfinder: BAUR, Peter, 86938 Schondorf (DE); AULER, Thomas, 42799 Leichlingen (DE); DECKWER, Roland, 65929 Frankfurt (DE); GIESSLER, Stephanie, 60529 Frankfurt (DE)
(86) Internationale Anmeldenummer: PCT/EP2007/005153
(87) Internationale Veröffentlichungsnummer: WO 2007/147500

(56) Entgegenhaltungen:
- EP-A1- 0 048 436
- EP-A1- 0 098 632
- EP-A1- 0 407 874
- EP-A1- 0 436 947
- EP-A2- 0 336 151
- WO-A-91/09011
- WO-A-2005/117583
- WO-A1-02/07519
- DE-A1- 2 743 607
- DE-A1- 3 726 094
- US-A- 4 182 621
- US-A1- 2003 212 195
- DATABASE CA [Online] CHEMICAL ABSTRACTS SERVICE, COLUMBUS, OHIO, US; XP002449826 gefunden im STN-INTERNATIONAL & JP 54 107525 A (KUMIAI CHEMICAL INDUSTRY) 23. August 1979 (1979-08-23)
- DATABASE WPI Week 199402 Derwent Publications Ltd., London, GB; AN 1994-013476 XP002449830 & JP 05 323523 A (MITSUBISHI PAPER MILLS LTD) 7. Dezember 1993 (1993-12-07)
- DATABASE WPI Week 199420 Derwent Publications Ltd., London, GB; AN 1994-164277 XP002449831 & JP 06 108092 A (LION CORP) 19. April 1994 (1994-04-19)
- DATABASE WPI Week 198939 Derwent Publications Ltd., London, GB; AN 1989-282477 XP002449832 & JP 01 207125 A (LION HYGIENE KK) 21. August 1989 (1989-08-21)

## Beschreibung

Die Erfindung betrifft das technische Gebiet der Zubereitungen (Formulierungen) für Agrochemikalien, wie Wirkstoffe auf dem Pflanzenschutzgebiet (agrochemische Wirkstoffe, Dünger), speziell Formulierungen von wasserlöslichen oder teilweise wasserlöslichen Pflanzenschutzmittelwirkstoffen, insbesondere Formulierungen von salzartigen Pflanzenschutzmittelwirkstoffen, ganz besonders von Glufosinat-salzen wie Glufosinat-ammoniumsalz, nach ISO auch als Glufosinate-ammonium bezeichnet. Außerdem betrifft die Erfindung Mischungen von Adjuvantien, welche in Kombination mit den genannten Agrochemikalien und deren Formulierungen eingesetzt werden können.

WO-A-2005117583 beschreibt Zusammensetzungen die Wirkstoffe wie Glufosinat(salze), Glyphosat(salze), Paraquat und Diquat sowie Tenside wie z.B. C₁₋₉-(oxyalkylen)-sulfate, bevorzugt Genapol LRO enthalten.

Wäßrige Formulierungen von Glufosinate-ammonium sind beispielsweise bekannt aus EP-A-0048436, EP-A-00336151 WO-A-0207519 und EP-A-1093722. Dabei werden bevorzugt Alkylethersulfate der Alkylkettenlängen C12-C16 mit 1 bis 10 Ethylenoxyeinheiten verwendet, die geeignet sind, die biologische Wirkung von Glufosinat bei der Applikation auf die grünen Teile von Pflanzen zu verstärken. Der genaue Wirkungsmechanismus der Alkylethersulfate ist dabei unbekannt. Andere Additive mit vergleichbaren Tensideigenschaften (Sprühnebelhäftung, Spreiten auf Zielpflanzen) einschließlich anderer anionischer Tenside führen zur Minderwirkung gegenüber den genannten Alkylethersulfaten. Auch Substanzen mit Lösungsmittelcharakter wie Polyetherglykole, Glyzerin, Mineralöle, Mineralölkonzentrate, Polymere, Puffer und andere Substanzen zeichnen sich nicht durch eine vergleichbare Wirkung aus.

Aufgrund der in den Formulierungen enthaltenen C₁₂-C₁₆-Alkylethersulfate des genannten Typs zeigen die Formulierungen bei der Verdünnung mit Wasser vor der Applikation und beim Versprühen während der Applikation ein ungünstiges Schaumverhalten, wenn keine Entschäumer zugesetzt werden.

Die Folgen sind dann oft ein Überlaufen der Spritzapparaturen, Verschmutzungen der Umwelt, unregelmäßige Spritzbeläge auf den Pflanzen und Rückstände von Pflanzenschutzmitteln in den Spritzapparaturen.

Gemäß EP-A-0407874 sind für wäßrige flüssige Pflanzenschutzmittel wirksame Entschäumer aus der Gruppe der Perfluoralkylphosphinsäuren oder -alkylphosphonsäuren vorgeschlagen worden. Derartige Entschäumer (z. B. ®Fluowet PP von Clariant) zeichnen sich durch eine hohe Entschäumerwirkung bei vergleichsweise niedriger Aufwandmenge aus, wobei die Entschäumerwirkung auch bei längerer Lagerung bei unterschiedlichen Temperaturen und bei mechanischer Beanspruchung der Formulierungen stabil bleibt. Darüber hinaus wird die biologische Wirksamkeit der formulierten Pflanzenschutzmittel durch den Gehalt an Entschäumer nicht beeinträchtigt.

Die bekannten fluorhaltigen Entschäumer sind jedoch nicht für alle Anwendungsgebiete gleichermaßen geeignet. Beispielsweise ist bei vielen derartigen Formulierungen die entschäumende Wirkung vom Härtegrad des Wassers (dem Gehalt an Calcium- und Magnesiumsalzen) abhängig, das für die Herstellung der Spritzbrühen verwendet wird. Nach allgemeinen ökotoxikologischen Erwägungen, ist es auch wünschenswert, die Verbreitung von fluorhaltigen Kohlenwasserstoffen in der Umwelt zu reduzieren.

Aus den genannten Gründen besteht ein Bedarf nach alternativen Lösungen, welche die Herstellung schaumarmer Formulierungen von Agrochemikalien, z. B. Pflanzenschutzmittelwirkstoffen wie Glufosinat oder Düngern, mit guten anwendungstechnischen Eigenschaften, beispielsweise guter Lagerstabilität und gleichmäßiger und hoher biologischer Wirksamkeit, ermöglichen.

Gegenstand der Erfindung sind Zubereitungen von Agrochemikalien, vorzugsweise flüssige wäßrige Zubereitungen von Agrochemikalien wie Pflanzenschutzmittelwirkstoffen und/oder Düngern, dadurch gekennzeichnet, dass sie
(a) eine oder mehrere in Wasser lösliche oder teilweise in Wasser lösliche Agrochemikalien, (Wirkstoffe vom Typ (a)),
(b) gegebenenfalls eine oder mehrere in Wasser unlösliche oder weitgehend in Wasser unlösliche Agrochemikalien, vorzugsweise Pflanzenschutzmittelwirkstoffe und/oder Dünger, (Wirkstoffe vom Typ (b)),
(c) Alkylethersulfate mit 1 bis 9 C-Atomen in der Alkylkette und mit 1 bis 20 Alkylenoxyeinheiten im Etherteil, vorzugsweise mit einer (Poly)Alkylenoxygruppe mit 1 bis 20 gleichen oder verschiedenen C₁-C₄-Alkylenoxyeinheiten, die endständig eine mit der Sulfatgruppe veresterte Ethylenoxygruppe enthält,
(d) gegebenenfalls anionaktive, nichtionogene, kationaktive und/oder zwitterionische Tenside,
(e) gegebenenfalls Wasser und
(f) gegebenenfalls weitere übliche Formulieungshilfsmittel enthalten,
   dadurch gekennzeichnet, dass es sich bei Komponente (a) um einen oder mehrere Wirkstoffe aus der Gruppe Glufosinate(salze), Glyphosate(salze), Paraquat und Diquat handelt.

Die erfindungsgemäßen entschäumerhaltigen Formulierungen eignen sich für Wirkstoffe vom Typ (a) aus der Gruppe Glufosinate(salze), Glyphosate(salze), Paraquat, Diquat, insbesondere Glufosinate-ammonium.

Geeignet sind auch die Kombination von Wirkstoffen vom Typ (a).

Die erfindungsgemäßen Formulierungen können darüber hinaus auch Wirkstoffe vom Typ (b) enthalten, die in Wasser weitgehend unlöslich sind, beispielsweise Herbizide aus der Gruppe der Diphenylether wie Oxyfluorfen, Carbamate, Thiocarbamate, Triphenylzinn- und Tributylzinnverbindungen, Halogenacetanilide, Phenoxyphenoxyalkancarbonsäurederivate sowie Heteroaryloxyphenoxyalkancarbonsäurederivate, wie Chinolyloxy-, Chinoxalyloxy-, Pyridyloxy-, Benzoxalyloxy- und Benzthiazolyloxyphenoxyalkancarbonsäureester, beispielsweise Diclofop-methyl, Fenoxaprop-ethyl oder Fenoxaprop-P-ethyl. Unter "in Wasser weitgehend unlöslich" wird hierbei verstanden, dass in wäßrigen Spritzbrühen in der Regel weniger als 1 Gewichtsprozent, vorzugsweise weniger als 0,5 Gew.-%, insbesondere weniger als 0,1 Gewichtsprozent des Wirkstoffs, bezogen auf das Gewicht des Wirkstoffs in der Spritzbrühe gelöst ist, und zwar vorzugsweise bei den praxisüblichen Konzentrationen der Wirkstoffe.

Bevorzugt sind dabei Wirkstoffe, die in Wasser eine Löslichkeit von weniger als 10 mg Wirkstoff pro Liter Wasser, vorzugsweise von weniger als 2 mg Wirkstoff pro Liter Wasser besitzen.

Auch entsprechend unlösliche Wirkstoffe aus Stoffklassen, welche normalerweise Wirkstoffe unterschiedlicher Löslichkeiten enthalten, kommen in Frage, z.B. Wirkstoffe aus der Gruppe der Cyclohexandionabkömmlinge, Imidazolinone, Pyrimidyloxypyridincarbonsäure-derivate, Pyrimidyloxy-benzoesäure-derivate, Sulfonylhamstoffe, Triazolopyrimidin-sulfonamid-derivate sowie S-(N-Aryl-N-alkylcarbamoylmethyl)-dithiophosphor-säureester,

Die genannten Kurzbezeichnungen für Wirkstoffe ("common names") wie Glufosinate, Glyphosate, Oxyfluorfen, Diclofop-methyl, Fenoxaprop-(P-)ethyl u.a. sind dem Fachmann bekannt; siehe z.B. "The Pesticide Manual" British Crop Protection Council, 13. oder 14. Auflage 2003 bzw. 2006; oder "The Compendium of Pesticide Common Names" (abfragbar u. a. im Internet) die Bezeichnungen umfassen dabei die bekannten Derivate wie Salze von Glufosinate und Glyphosate, insbesondere die handelsüblichen Formen.

Entsprechend können auch Wirkstoffe aus der Gruppe der Safener, Wachstumsregulatoren, Insektizide und Fungizide als Komponente (b) in Frage kommen.

Die Art der verwendeten Wirkstoffe vom Typ (a) und (b) bestimmen das Anwendungsgebiet der agrochemischen Formulierungen, vorzugsweise Pflanzenschutzmittel oder Düngemittel. Beispielsweise sind viele der Pflanzenschutzmittel auf die Kontrolle oder Bekämpfung von Schadorganismen gerichtet. Im Falle von Herbiziden sind unerwünschte Pflanzen der Typ der Schadorganismen, welche durch die Anwendung der Pflanzenschutzmittel oder agrochemischen Formulierungen kontrolliert werden können; im Falle von Insektiziden sind es Schadinsekten und im Falle von Fungiziden Schadpilze. Dabei kommen auch Mischungen der Mittel und daher Kombinationen der Anwendungsrichtungen in Frage.

Bevorzugt sind Formulierungen mit Wirkstoffen vom Typ (a) aus der Gruppe enthaltend eine oder mehrere Verbindungen der Formel (1) oder deren Salze, 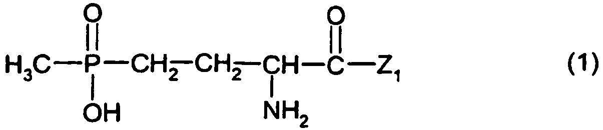 worin
Z₁ einen Rest der Formel -OM,
und dabei
M = H oder ein Salz bildendes Kation bedeuten,
und/oder eine oder mehrere Verbindungen der Formel (2) oder deren Salze, 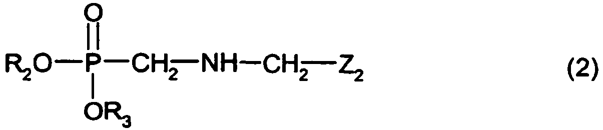 worin
Z₂ einen Rest der Formel CO₂R₁ bedeutet, in dem R₁ = Q oder ein Salz bildendes Kation ist und dabei Q = H, ist und
R₂,R₃ jeweils unabhängig voneinander H, oder ein Salz bildendes Kation bedeuten.

Die Verbindungen der Formel (1) enthalten ein asymmetrisches C-Atom. Das L-Enantiomere wird dabei als biologisch aktives Isomer angesehen. Die Formel (1) umfaßt daher alle Stereoisomeren und deren Gemische, insbesondere das Racemat und das jeweils biologisch wirksame Enantiomer. Beispiele für Wirkstoffe der Formel (1) sind folgende:
◆ Glufosinate und dessen Ammoniumsalz in racemischer Form, d.h. 2-Amino-4-[hydroxy(methyl)phosphinoyl]-butansäure bzw. dessen Salze wie das Ammoniumsalz oder das Natriumsalz,
◆ das L-Enantiomer von Glufosinate und dessen Salze wie das Ammoniumsalz oder Natriumsalz,

Das Racemat von Glufosinate-ammonium wird alleine üblicherweise in Dosierungen ausgebracht, die zwischen 200 und 1000 g a.i./ha (=Gramm Aktivsubstanz pro Hektar) liegen. Glufosinate-ammonium ist in diesen Dosierungen vor allem dann wirksam, wenn es über grüne Pflanzenteile aufgenommen wird; siehe "The Pesticide Manual" 13. oder 14. Auflage, British Crop Protection Council 2003 bzw. 2006. Glufosinate-ammonium wird vorwiegend zur Bekämpfung von Unkräutern und Ungräsem in Plantagenkulturen und auf Nichtkulturland sowie mittels spezieller Applikationstechniken auch zur Zwischenreihenbekämpfung in landwirtschaftlichen Flächenkulturen wie Mais, Baumwolle u.a. eingesetzt. Zunehmende Bedeutung hat auch der Einsatz in transgenen Kulturen, welche gegenüber dem Wirkstoff resistent oder tolerant sind, z. B. in glufosinate-toleranten Kulturen wie ®LibertyLink-Raps, ®LibertyLink-Mais oder ®LibertyLink-Baumwolle.

Bei den Verbindungen der Formel (2) handelt es sich um N-(Phosphonoalkyl)-glycin und damit um Derivate der Aminosäure Glycin. Die herbiziden Eigenschaften von N-(Phosphonomethyl)-glycin ("Glyphosate") sind z. B. in der US-Patentschrift Nr. 3799758 beschrieben.

In der Regel wird Glyphosate in Pflanzenschutzformulierungen in Form der wasserlöslichen Salze verwendet, wobei im Zusammenhang mit der vorliegenden Erfindung vor allem das Isopropylammoniumsalz von Bedeutung ist; siehe "The Pesticide Manual" 13. oder 14. Auflage, British Crop Protection Council 2003 bzw. 2006. Glyphosate-isopropylammonium wird ähnlich wie Glufosinate-ammonium zur Bekämpfung von Unkräutern und Ungräsem in Plantagenkulturen und auf Nichtkulturland eingesetzt. Zunehmende Bedeutung hat auch der Einsatz in transgenen Kulturen, welche gegenüber dem Wirkstoff resistent oder tolerant sind, bespielsweise z. B. in glyphosate-toleranten Kulturen wie ®Roundup-Ready-Mais, ®Roundup-Ready-Soja, ®Roundup-Ready-Raps und ®Roundup-Ready-Baumwolle.

Die erfindungsgemäße Komponente (c) betrifft Alkylethersulfate mit 1 bis 9 C-Atomen in der Alkylkette und mit 1 bis 20 Alkylenoxyeinheiten, vorzugsweise 1 bis 12 Alkylenoxyeinheiten im Etherteil, wobei mit dem Begriff Alkylethersulfate Verbindungen aus der Gruppe der (C₁-C₉)Alkyl-(poly)glykolether-sulfate, in der Regel mit endständiger Sulfatgruppe, bezeichnet wird.

Die (Poly)Alkylenoxygruppe kann gleiche oder verschiedene Alkylenoxyeinheiten enthalten, beispielsweise C₁-C₄-Alkylenoxyeinheiten wie 1,2-Ethylenoxy [-CH₂CH₂-O-], kurz auch als "Ethylenoxy-gruppe" oder "EO" bezeichnet, 1,2-Propylenoxy [-CH(CH₃)CH₂O-], 2,3-Propylenoxy [-CH₂CH(CH₃)-O-], 1,2-Butylenoxy [-CH₂CH(C₂H₅)-O-], 2,3-Butylenoxy [-CH(CH₃)CH(CH₃)-O-), 3,4-Butylenoxy [-CH(C₂H₅)CH₂O-], 1,1-Dimethyl-1,2-ethylenoxy [-C(CH₃)₂CH₂-O-] und 2,2-Dimethyl-1,2-ethylenoxy [-CH₂C(CH₃)₂-O-].

Bevorzugt sind dabei (Poly)Alkylenoxygruppen, die endständig eine mit der Sulfatgruppe veresterte 1,2-Ethylenoxygruppe enthalten, d. h. die letzte Alkylenoxy-Einheit in der Polyalkylenoxygruppe, welche die Sulfatgruppe trägt, ist vorzugsweise eine EO-Einheit.

Besonders bevorzugt sind als Komponente (c) (C₁-C₉)Alkyl-(poly)ethylenglykolethersulfate mit 1 bis 20 EO, vorzugsweise 1 bis 10 EO.

Die Alkylreste in der (C₁-C₉)Alkyl-gruppe können im Falle von Gruppen mit 3 oder mehr C-Atomen geradkettig oder verzweigt sein.

Die Alkylethersulfate stellen anionische Tenside dar. Die Gegenionen in diesen anionischen Verbindungen können dabei in der Regel alle in der Landwirtschaft einsetzbaren Kationen sein, beispielsweise Alkalimetallkationen wie Natrium oder Kalium, Erdalkalimetallkationen wie Magnesium oder Calcium, Ammonium oder organisch substituierte Ammoniumionen wie Alkylammonium, Dialkylammonium, Trialkylammonium, z. B. Trimethylammoniurn, Isopropylammonium. Auch andere kationische Gruppe wie das Trimesium-ion (bekannt aus Sulfosate) oder alkoxylierte Ammoniumionen kommen in Frage.

Geeignete Alkylethersulfate sind beispielsweise
Methyl(poly)glykolethersulfat,
Ethyl(poly)glykolethersulfat,
Propyl(poly)glykolethersulfat, wie n-Propyl- oder Isopropyl(poly)glykolethersulfat, Butyl(poly)glykolethersulfat, wie n-Butyl-, Isobutyl-, sec-Butyl oder tert-Butyl(poly)glykolethersulfat,
Pentyl(poly)glykolethersulfat, wie n-Pentyl- oder Isopentyl(poly)glykolethersulfat, Hexl(poly)glykolethersulfat, wie n-Hexl-, 1-Methyl-pentyl- oder Isohexyl(poly)glykolethersulfat,
Heptyl(poly)glykolethersutfat, wie n-Heptyl- oder 1-Methylhexyl(poly)glykolethersulfat,
Octyl(poly)glykolethersulfat, wie n-Octyl-, Isooctyl- oder 2-Ethyl-hexyl-(poly)glykolethersulfat, und
Nonyl(poly)glykolethersulfat, wie n-Nonyl(poly)glykolethersulfat,
wobei jeweils (Poly)glykolether-teile mit 1 bis 20 Alkylenglykoleinheiten enthalten sind und dabei die bevorzugt genannten (Poly)Alkylenglykolgruppen bevorzugt sind. Weiter bevorzugt sind die (Poly)glykolether-teile aus 1 bis 10 Ethylenoxy-Einheiten (genauer 1,2-Ethylenoxy-Einheiten). Die Gegenionen sind vorzugsweise Natrium-, Kalium- und -Ammonium-ionen. Spezielle Beispiele für Komponente (c) sind in der nachfolgenden Tabelle A1 aufgeführt.

In der Tabelle A1 sind Alkyl(poly)ethylenglykolethersulfate der Formel (A1) aufgeführt, 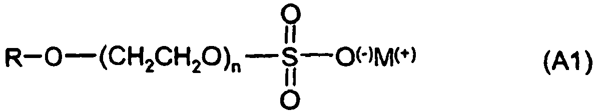 in der
R eine Alkylgruppe bedeutet,
n eine ganze Zahl von 1 bis 10 ist, welche die Zahl der Ethylenoxygruppen in der (Poly)ethylenoxy-Brücke bedeutet, und
M⁽⁺⁾ ein Kation, vorzugsweise H⁽⁺⁾ oder ein Metallion oder ein Ammoniumion bedeutet, wobei R und n der jeweiligen Verbindung im Verbindungsnamen genau angegeben sind.

**Tabelle A1: Spezielle Ethylenglykolethersulfate**

| |
|---|
| Methyl-ethylenglykolethersulfat, |
| Methyl-diethylenglykolethersulfat, |
| Methyl-triethylenglykolethersulfat, |
| Methyl-tetraethylenglykolethersulfat, |
| Methyl-pentaethylenglykolethersulfat, |
| Methyl-hexaethylenglykolethersulfat, |
| Methyl-heptaethylenglykolethersulfat, |
| Methyl-octaethylenglykolethersulfat, |
| Methyl-nonaethylenglykolethersulfat, |
| Methyl-decaethylenglykolethersulfat, |
| Ethyl-ethylenglykolethersulfat, |
| Ethyl-diethylenglykolethersulfat, |
| Ethyl-triethylenglykolethersulfat, |
| Ethyl-tetraethylenglykolethersulfat, |
| Ethyl-pentaethylenglykolethersulfat, |
| Ethyl-hexaethylenglykolethersulfat, |
| Ethyl-heptaethylenglykolethersulfat, |
| Ethyl-octaethylenglykolethersulfat, |
| Ethyl-nonaethylenglykolethersulfat, |
| Ethyl-decaethylenglykolethersulfat, |
| n-Propyl-ethylenglykolethersulfat, |
| n-Propyl-diethylenglykolethersulfat, |
| n-Propyl-triethylenglykolethersulfat, |
| n-Propyl-tetraethylenglykolethersulfat, |
| n-Propyl-pentaethylenglykolethersulfat, |
| n-Propyl-hexaethylenglykolethersulfat, |
| n-Propyl-heptaethylenglykolethersulfat, |
| n-Propyl-octaethylenglykolethersulfat, |
| n-Propyl-nonaethylenglykolethersulfat, |
| n-Propyl-decaethylenglykolethersulfat, |
| Isopropyl-ethylenglykolethersulfat, |
| Isopropyl-diethylenglykolethersulfat, |
| Isopropyl-triethylengiykolethersulfat, |
| Isopropyl-tetraethylengiykolethersulfat, |
| Isopropyl-pentaethylengiykolethersulfat, |
| Isopropyl-hexaethylenglykolethersulfat, |
| Isopropyl-heptaethylenglykolethersulfat. |
| Isopropyl-octaethylenglykolethersulfat, |
| Isopropyl-nonaethylengtykolethersuffat, |
| Isopropyl-decaethylenglykolethersulfat, |
| n-Butyl-ethylenglykolethersulfat, |
| n-Butyl-diethylenglykolethersulfat, |
| n-Butyl-triethylenglykolethersulfat, |
| n-Butyl-tetraethylenglykolethersulfat, |
| n-Butyl-pentaethylenglykolethersulfat, |
| n-Butyl-hexaethylenglykolethersulfat, |
| n-Butyl-heptaethylenglykolethersulfat, |
| n-Butyl-octaethylenglykolethersulfat, |
| n-Butyl-nonaethylenglykolethersulfat, |
| n-Butyl-decaethylenglykolethersulfat, |
| Isobutyl-ethylenglykolethersulfat, |
| Isobutyl-diethylenglykolethersulfat, |
| Isobutyl-triethylenglykolethersulfat, |
| Isobutyl-tetraethylenglykotethersulfat, |
| Isobutyl-pentaethylenglykolethersulfat, |
| Isobutyl-hexaethylenglykolethersulfat, |
| Isobutyl-heptaethylenglykolethersulfat, |
| Isobutyl-octaethylenglykotethersulfat, |
| Isobutyl-nonaethylenglykolethersulfat, |
| Isobutyl-decaethylenglykolethersulfat, |
| sec-Butyl-ethylenglykolethersulfat, |
| sec-Butyl-diethylenglykolethersulfat, |
| sec-Butyl-triethylenglykolethersulfat, |
| sec-Butyl-tetraethylenglykolethersulfat, |
| sec-Butyl-pentaethylenglykolethersulfat, |
| sec-Butyl-hexaethylenglykolethersulfat, |
| sec-Butyl-heptaethyienglykolethersulfat, |
| sec-Butyl-octaethylenglykolethersulfat, |
| sec-Butyl-nonaethylenglykolethersulfat, |
| sec-Butyhdecaethylenglykolethersulfat, |
| tert-Butyhethylenglykolethersulfat, |
| tert-Butyl-diethylenglykolethersulfat, |
| tert-Butyl-triethylenglykotethersulfat, |
| tert-Butyl-tetraethylenglykolethersulfat, |
| tert-Butyl-pentaethylenglykolethersulfat, |
| tert-Butyl-hexaethylenglytCOlethersutfat, |
| tert-Butyl-heptaethylenglykolethersulfat, |
| tert-Butyl-octaethylenglykolethersulfat, |
| tert-Butyl-nonaethylenglykolethersulfat, |
| tert-Butyl-decaethylenglykolethersulfat, |
| n-Pentyl-ethylenglykolethersulfat, |
| n-Pentyl-diethylenglykolethersulfat, |
| n-Pentyl-triethylenglykolethersulfat, |
| n-Pentyl-tetraethylenglykolethersulfat, |
| n-Pentyl-pentaethylenglykolethersulfat, |
| n-Pentyl-hexaethylenglykolethersulfat, |
| n-Pentyl-heptaethylenglykolethersulfat, |
| n-Pentyl-octaethylenglykolethersulfat, |
| n-Pentyl-nonaethylenglykolethersulfat, |
| n-Pentyl-decaethylenglykolethersulfat, |
| Isopentyl-ethylenglykolethersulfat, |
| Isopentyl-diethylenglykolethersulfat, |
| Isopentyl-triethylenglykolethersulfat, |
| Isopentyl-tetraethylenglykolethersulfat, |
| Isopentyl-pentaethylenglykolethersutfat, |
| Isopentyl-hexaethylenglykolethersulfat, |
| Isopentyl-heptaethylenglykolethersulfat, |
| Isopentyl-octaethylenglykolethersulfat, |
| Isopentyl-nonaethylenglykolethersulfat, |
| Isopentyl-decaethylenglykolethersulfat, |
| n-Hexyl-ethylenglykolethersulfat, |
| n-Hexyl-diethylenglykolethersulfat, |
| n-Hexyl-triethylenglykolethersulfat, |
| n-Hexyl-tetraethylenglykolethersulfat, |
| n-Hexyl-pentaethylenglykolethersulfat, |
| n-Hexyl-hexaethylenglykolethersulfat, |
| n-Hexyl-heptaethylenglykolethersuffat, |
| n-Hexyl-octaethylenglykolethersulfat, |
| n-Hexyl-nonaethylenglykolethersulfat, |
| n-Hexyl-decaethylenglykolethersulfat, |
| n-Heptyl-ethylenglykolethersulfat, |
| n-Heptyl-diethylenglykolethersulfat, |
| n-Heptyl-triethylenglykolethersulfat, |
| n-Heptyl-tetraethylenglykolethersulfat, |
| n-Heptyl-pentaethylenglykolethersulfat, |
| n-Heptyl-hexaethylenglykolethersulfat, |
| n-Heptyl-heptaethylenglykolethersulfat, |
| n-Heptyl-octaethylenglykolethersulfat, |
| n-Heptyl-nonaethylenglykolethersulfat, |
| n-Heptyl-decaethylenglykolethersulfat, |
| n-Octyl-ethylengtykolethersulfat, |
| n-Octyl-diethylenglykolethersulfat, |
| n-Octyl-triethylenglykolethersulfat, |
| n-Octyl-tetraethylenglykolethersulfat, |
| n-Octyl-pentaethylenglykolethersulfat, |
| n-Octyl-hexaethylenglykolethersulfat, |
| n-Octyl-heptaethylenglykolethersulfat, |
| n-Octyl-octaethylenglykolethersulfat, |
| n-Octyl-nonaethylenglykolethersuffat, |
| n-Octyl-decaethylenglykolethersulfat, |
| 2-Ethyl-hexyi-ethytenglykolethersulfat, |
| 2-Ethyl-hexyl-diethylenglykolethersulfat, |
| 2-Ethyl-hexyl-triethylenglykolethersulfat, |
| 2-Ethyl-hexyl-tetraethylenglykolethersulfat, |
| 2-Ethyl-hexyl-pentaethylenglykolethersulfat, |
| 2-Ethyl-hexyl-hexaethylenglykolethersulfat, |
| 2-Ethyl-hexyl-heptaethylenglykolethersulfat, |
| 2-Ethyl-hexyl-octaethylenglykolethersulfat, |
| 2-Ethyl-hexyl-nonaethylenglykolethersulfat, |
| 2-Ethyl-hexyl-decaethylenglykolethersulfat, |
| n-Nonyl-ethylenglykolethersulfat, |
| n-Nonyl-diethylenglykolethersulfat, |
| n-Nonyl-triethylenglykolethersulfat, |
| n-Nonyl-tetraethylenglykolethersulfat, |
| n-Nonyl-pentaethylenglykolethersulfat, |
| n-Nonyl-hexaethylenglykolethersulfat, |
| n-Nonyl-heptaethylenglykolethersulfat, |
| n-Nonyl-octaethylenglykolethersulfat, |
| n-Nonyl-nonaethylenglykolethersulfat, |
| n-Nonyl-decaethylenglykolethersulfat, |

wobei jeweils deren beliebige Salze und deren Mischungen bevorzugt sind, weiter bevorzugt deren Alkalimetallsalze mit M⁽⁺⁾ = einem Alkalimetallkation oder Ammoniumsalze mit vorzugsweise mit M⁺ = NH₄⁺ als Gegenion in Frage kommen und wobei speziell deren Natriumsalze, Kaliumsalze oder Ammoniumsalze, insbesondere deren Natriumsalze bevorzugt sind.

Die speziellen Salze ergeben dann eine Liste von einzelnen Verbindungen entsprechend Tabelle A1, wobei aus Referenzzwecken die Natriumsalze eine der Tabelle A1 entsprechende Tabelle A2 ergeben (nicht im einzelnen wiederholt), die Kaliumsalze eine der Tabelle A1 entsprechende Tabelle A3 ergeben und die Ammoniumsalze eine der Tabelle A1 entsprechende Tabelle A4 ergeben, wobei anstelle der Ethersulfate das Ethersulfatnatriumsalz bzw. Ethersulfatkaliumsalz beziehungsweise das Ethersulfatammoniumsalz aufgeführt sind.

Besonders bevorzugt sind auch Mischungen von Natrium- und Kalium- und/oder Ammoniumsalzen der Ethersulfate der genannten Tabellen A2, A3 und A4.

Von den genannten Additiven (c) sind die Verbindungen mit 4 bis 8 C-Atomen, insbesondere mit 6 bis 8 C-Atomen im Alkylrest und 1 bis 10 Ethylenoxyeinheiten bevorzugt. Bevorzugt sind auch die Additive mit linearen Alkylresten.

Die Verbindungen sind neu und/oder können analog Verfahren hergestellt werden, wie sie für die Alkylethersulfate mit längeren Alkylketten bekannt sind. Die neuen Verbindungen der Komponente (c) sind daher ebenfalls Gegenstand der Erfindung.

Die Zubereitungen können als Komponente (d) gegebenenfalls anionaktive, nichtionogene, kationaktive und/oder zwitterionische Tenside, enthalten. Diese Verbindungen können helfen, die Grenzflächenaktivität auf ein gewünschtes Niveau anzuheben oder einzustellen, insbesondere wenn die verwendeten Alkylethersulfate sehr kurze Alkylreste enthalten.

Als Tenside für die Komponente (d) kommen beispielsweise folgende in Frage (wobei jeweils EO=Ethylenoxid-Einheiten, PO=Propylenoxid-Einheiten und BO=Butylenoxid-Einheiten von seiten der Herstellung bzw. entsprechende Alkylenoxy-Einheiten in den Tensidmolekülen bedeuten):
d1) Anionaktive Tenside wie beispielsweise:
   d1-1) Anionische Derivate von Fettalkoholen mit 10-24 Kohlenstoffatomen mit 0-60 EO und/oder 0-20 PO und/oder 0-15 BO in beliebiger Reihenfolge in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapol^{®}LRO, Sandopan^{®}-Marken, Hostaphat/Hordaphos^{®}-Marken von Clariant;
   d1-2) anionische Derivate von Copolymeren bestehend aus EO-, PO- und/oder BO-Einheiten mit einem Molekulargewicht von 400 bis 10⁸ in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);
   d1-3) anionische Derivate von Alkylenoxydaddukten von C₁ - C₉ Alkoholen in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis), soweit deren Strukturen nicht unter die Definition der Alkylethersulfate der Komponente (c) fallen;
   d1-4) anionische Derivate von Fettsäure-alkoxylaten in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);

Bevorzugte anionaktive Tenside sind Alkylpolyglykolethersulfate, insbesondere Fettalkoholdiethylenglykolethersulfat (z. B. Genapol LRO^{®}, Clariant), oder
Alkylpolyglykolethercarboxylate (z. B. 2-(Isotridecyloxy-polyethylenoxy)-ethyl-carboxymethyl-ether, Marlowet 4538^{®}, Hüls),
wobei der Gehalt und die Art der zusätzlichen anionischen Tenside zweckmäßig so gewählt wird, dass kein unakzeptables Schaumverhalten der Formulierung resultiert.
d2) Kationaktive oder zwitterionische Tenside wie beispielsweise:
   d2-1) Alkylenoxidaddukte von Fettaminen, quartäre Ammonium-Verbindungen mit 8 bis 22 Kohlenstoffatomen (C₈-C₂₂) wie z.B. die Genamin^{®} C-, L-, O-, T-Marken von Clariant;
   d2-2) oberflächenaktive, zwitterionische Verbindungen wie Tauride, Betaine und Sulfobetaine in Form von Tegotain^{®}-Marken von Goldschmidt, Hostapon^{®}T- und Arkopon^{®}T-Marken von Clariant.
d3) Nichtionogene Tenside wie beispielsweise:
   d3-1) Fettalkohole mit 8-24 Kohlenstoffatomen mit 0-60 EO und/oder 0-20 PO und/oder 0-15 BO in beliebiger Reihenfolge. Beispiele für derartige Verbindungen sind Genapol^{®} C-, L-, O-, T-, UD-, UDD-, X-Marken von Clariant, Plurafac^{®}- und Lutensol^{®} A-, AT-, ON-, TO-Marken von BASF, Marlipal^{®}24 und 013 Marken von Condea, Dehypon^{®}-Marken von Henkel, Ethylan^{®}-Marken von Akzo-Nobel wie Ethylan CD 120;
   d3-2) Fettsäure- und Triglyceridalkoxylate wie die Serdox^{®}NOG-Marken von Condea oder die Emulsogen^{®}-Marken von Clariant;
   d3-3) Fettsäureamidalkoxylate wie die Comperlan^{®}-Marken von Henkel oder die Amam^{®}-Marken von Rhodia;
   d3-4) Alkylenoxydaddukte von Alkindiolen wie die Surfynol®-Marken von Air Products; Zuckerderivate wie Amino- und Amidozucker von Clariant;
   d3-5) Glukitole von Clariant;
   d3-6) oberflächenaktive Verbindungen auf Silikon- bzw Silanbasis wie die Tegopren^{®}-Marken von Goldschmidt und die SE^{®}-Marken von Wacker, sowie die Bevaloid^{®}- , Rhodorsil^{®}- und Silcolapse^{®}-Marken von Rhodia (Dow Coming, Reliance, GE, Bayer),
   d3-7) grenzflächenaktive Sulfonamide z.B. von Bayer;
   d3-8) grenzflächenaktive Polyacryl- und Polymethacrylderivate wie die Sokalan^{®}-Marken von der BASF;
   d3-9) oberflächenaktive Polyamide wie modifizierte Gelatine oder derivatisierte Polyasparginsäure von Bayer und deren Derivate,
   d3-10)tensidische Polyvinylverbindungen wie modifiziertes PVP wie die Luviskol^{®}-Marken von BASF und die Agrimer^{®}-Marken von ISP oder die derivatisierten Polyvinylacetate wie die Mowilith^{®}-Marken von Clariant oder die Polyvinylbutyrate wie die Lutonal^{®}-Marken von der BASF, die Vinnapas^{®}- und die Pioloform^{®}-Marken von Wacker oder modifizierten Polyvinylalkohole wie die Mowiol^{®}-Marken von Clariant,
   d3-11) oberflächenaktive Polymere auf Basis von Maleinsäureanhydrid und/oder Umsetzungsprodukten von Maleinsäureanhydrid sowie Maleinsäureanhydrid und/oder Umsetzungsprodukte von Maleinsäureanhydrid beinhaltende Copolymere wie die Agrimer^{®}-VEMA-Marken von ISP,
   d3-12)oberfächenaktive Derivate von Montan-, Polyethylen-, und Polypropylenwachsen wie die Hoechst^{®}-wachse oder die Licowet^{®}-Marken von Clariant,
   d3-13) Alkylenoxydaddukte auf Polyolbasis wie Polyglykol^{®}-Marken von Clariant,
   d3-14)grenzflächenaktive Polyglyceride und deren Derivate von Clariant.
   d3-15)Alkylpolysaccharide und deren Mischungen wie beispielsweise aus der ®Atplus-Reihe von Uniqema, vorzugsweise Atplus 435,
   d3-16)Alkylpolyglycoside in Form der APG^{®}-Marken von Henkel, beispielsweise ®Plantaren APG 225 (Fettalkohol C₈-C₁₀-Glucosid),
   d3-17)Sorbitanester in Form der Span^{®}- oder Tween^{®}-Marken von Uniqema,
   d3-18)Cyclodextrinester oder -ether von Wacker,
   d3-19)oberflächenaktive Cellulose- und Algin-, Pektin- und Guarderivate wie die Tylose^{®}-Marken von Clariant, die Manutex^{®}-Marken von Kelco und Guarderivate von Cesalpina,
   d3-20)Alkylpolyglykosid-Alkylpolysaccharid-Mischungen auf Basis C₈-C₁₀-Fettalkohol wie ®Glucopon 225 DK und ®Glucopon 215 CSUP (Cognis).

Die erfindungsgemäßen Zubereitungen können als Komponente (e) gegebenenfalls Wasser enthalten. Bevorzugt sind wäßrige flüssige konzentrierte lagerfähige Formulierungen. Auch die anwendungsfertigen wäßrigen Spritzbrühen sind als erfindungsgemäße Formulierungen anzusehen.

Ebenfalls erfindungsgemäß sind wasserfreie oder wasserarme Formulierungen wie Stäubemittel oder Granulate oder emulgierbare Konzentrate, die erst zur Anwendung mit Wasser zu Spritzbrühen verdünnt werden.

Die erfindungsgemäßen Zubereitungen enthalten als Komponente (f) gegebenenfalls weitere übliche Formulierungshilfsmittel, wie Lösungsmittel, Inertmaterialien, wie Haft-, Netz-, Dispergier-, Emulgier-, Penetrations-, Konservierungs- und Frostschutzmittel, Füll-, Träger- und Farbstoffe, Verdunstungshemmer und den pH-Wert (Puffer, Säuren und Basen) oder die Viskosität beeinflussende Mittel (z. B. Verdicker) und gegebenenfalls auch Entschäumer, wobei letztere allenfalls in reduzierter Menge.sinnvoll sind.

Übliche Formulierungshilfsmittel (f) sind beispielsweise die genannten Inertmaterialien, Frostschutzmittel, Verdunstungshemmer, Konservierungsmittel, Farbstoffe, u. a.; bevorzugte Formulierungshilfsmittel (f) sind
◆ Frostschutzmittel und Verdunstungshemmer wie Glycerin oder Ethylenglykol, z.B. in einer Menge von 2 bis 10 Gew.-% und
◆ Konservierungsstoffe, z.B. Mergal K9N^{®} (Riedel) oder Cobate C^{®},

Möglich sind als Komponente (f) beispielsweise organische Lösungsmittel oder anorganische Lösungsmittel oder Gemische davon. In der Regel enthalten sie im Falle von flüssigen Zubereitungen Wasser (Komponente (e)) als Lösungsmittel. Für spezielle Anwendungen sind aber auch Stäubemittel oder Granulate möglich. Auch wasserfreie Zubereitungen auf Basis von organischen Lösungsmitteln wie unpolaren oder polaren organischen Lösungsmitteln kommen in Frage.

Beispiele für vergleichsweise unpolare Lösungsmittel im Sinne der Erfindung sind
◆ aliphatische oder aromatische Kohlenwasserstoffe, wie z.B. Mineralöle bzw. Toluol, Xylole und Naphthalinderivate,
◆ halogenierte aliphatische oder aromatische Kohlenwasserstoffe wie Methylenchlorid bzw. Chlorbenzol,
◆ Öle, z.B. auf pflanzlicher Basis wie Maiskeimöl und Rapsöl, oder Ölderivate wie Rapsölmethylester.

Im Zusammenhang mit der vorliegenden Erfindung bezeichnet der Begriff "polare organische Lösungsmittel" beispielsweise polare protische oder aprotische polare Lösungsmittel und deren Mischungen. Beispiele für polare Lösungsmittel im Sinne der Erfindung sind
◆ aliphatische Alkohole, wie z.B. niedere Alkanole wie Methanol, Ethanol, Propanol, Isopropanol und Butanol, oder mehrwertige Alkohole wie Ethylenglykol, Glycerin,
◆ polare Ether wie Tetrahydrofuran (THF), Dioxan, Alkylenglykolmonoalkyether und -dialkylether wie z.B.
   Propylenglykolmonomethylether, Propylenglykolmonoethylether, Ethylenglykolmonomethylether oder -monoethylether, Diglyme und Tetraglyme;
◆ Amide wie Dimethytformamid (DMF), Dimethylacetamid, Dimethylcaprylamid, Dimethylcaprinamid (^{®}Hallcomide) und N-Alkylpyrrolidone;
◆ Ketone wie Aceton;
◆ Ester auf Basis von Glycerin und Carbonsäuren wie Glycerinmono-, di- und triacetat,
◆ Lactame,
◆ Lactatester mit Kettenlängen von 1 bis 10 C-Atomen im Esterteil,
◆ Kohlensäurediester;
◆ Nitrile wie Acetonitril, Propionitril, Butyronitril und Benzonitril;
◆ Sulfoxide und Sulfone wie Dimethylsulfoxid (DMSO) und Sulfolan.

Häufig eignen sich auch Kombinationen verschiedener Lösungsmittel, die zusätzlich Alkohole wie Methanol, Ethanol, n- und i-Propanol, n-, i-, t- und 2-Butanol enthalten.

Im Falle einphasiger wäßrig-organischer Lösungen kommen die ganz oder weitgehend wassermischbaren Lösungsmittel oder Lösungsmittelgemische in Frage. Bevorzugte organische Lösungsmittel im Sinne der vorliegenden Erfindung sind polare organische Lösungsmittel wie N-Methylpyrrolidon und Dowanol^{®} PM (Propylenglykol-monomethylether).

Die zur Herstellung der o.a. Formulierungen notwendigen Hilfsmittel wie insbesondere Tenside sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem. Publ.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C. Hanser-Verlag, München, 4. Auflage 1986, und jeweils dort zitierte Literatur.

Gegenstand der Erfindung ist auch die Verwendung der Alkylethersulfate mit 6 bis 8 C-Atomen in Alkylrest und 1 bis 10 Ethylenorgeinheiten, gegebenenfalls in Kombination mit weiteren Tensiden, als schaumarme Additive zur Wirkungsverstärkung von Agrochemikalien, (a) wobei die Agrochemikalien ausgewählt sind aus der Gruppe, bestehend aus Glufosinate(salze), Glyphosate(salze), Paraquat und Diquat und Dünger. Dazu gehört die erfindungsgemäße Verwendung in Spritzbrühen oder in Zubereitungen, die zur Herstellung von Spritzbrühen bestimmt sind, wobei die Wirkstoffe in den Spritzbrühen vorzugsweise ganz oder teilweise wasserlöslich sind, d. h. in der Regel zu 1 bis 100 Gewichtsprozent, vorzugsweise 5 bis 100 Gewichtsprozent, weiter bevorzugt zu 10 bis 100 Gewichtsprozent, insbesondere zu 20 bis 100 Gewichtsprozent, ganz besonders zu 30 bis 100 Gewichtsprozent, bezogen auf das Gewicht des Wirkstoffs in der Spritzbrühe gelöst sind, und zwar vorzugsweise bei den praxisüblichen Konzentrationen der Wirkstoffe. Dabei sind die obengenannten Wirkstoffe (a) die Wirkstoffe.

Die Verbindungen können dabei sowohl in Einzelformulierungen oder in Coformulierung von Wirkstoffen oder als Zusatz im Tank-mix-Verfahren verwendet werden.

Aufgrund ihrer oberflächenaktiven Eigenschaften beschleunigen die Alkylethersulfate (c) die Aufnahme der Wirkstoffe a) in die Pflanze, insbesondere die Aufnahme über das Blatt der Pflanze, und tragen so zur besseren Wirkung der Wirkstoffe bei. Überraschenderweise ergeben die oberflächenaktiven Eigenschaften der erfindungsgemäß verwendeten Alkylethersulfate c) günstige Wirkungsverbesserungen bei wesentlich verringerter Schaumneigung der Zubereitungen oder Spritzbrühen.

Die Menge an Alkylethersulfat in den Zubereitungen wird zweckmäßig so gewählt, dass bei Zubereitung der Spritzbrühen eine nicht schäumende oder vergleichsweise wenig schäumende Spritzbrühe resultiert. Die Menge richtet sich im Allgemeinen nach der gewählten Kettenlänge im Alkylteil und der Anzahl der Alkylenoxy-einheiten bzw. der EO-Einheiten im Ethersulfat-teil.

Das Gewichtsverhältnis an Wirkstoff (a) (bezogen auf 100% Wirkstoff) zu Alkylethersulfat (c) (bezogen auf waschaktive Substanz) kann in weiten Bereichen variieren und ist vorzugsweise im Bereich von 1:0,1 bis 1:10, insbesondere 1:0,5 bis 1:5.

Mit Hilfe der Komponentenmischungen lassen sich konzentrierte schaumarme Zubereitungen, vorzugsweise konzentrierte schaumarme flüssige wäßrige Zubereitungen, von Agrochemikalien, vorzugsweise salzartigen Pflanzenschutzmittelwirkstoffen, wie Glufosinate-ammonium, herstellen, welche
(a) 1 bis 40 Gew.-%, vorzugsweise 2 bis 30 Gew.%, insbesondere 5 bis 20 Gew.-%, in Wasser lösliche oder teilweise lösliche Agrochemikalien, vom Typ (a)
   dadurch gekennzeichnet, dass es sich bei Komponente (a) um einen oder mehrere Wirkstoffe aus der Gruppe Glufosinate(salze), Glyphosate(salze), Paraquat und Diquat handelt,
(b) 0 bis 40 Gew.-%, vorzugsweise 0 bis 20 Gew.-%, insbesondere 0 bis 10 Gew.-% in Wasser unlösliche oder weitgehend unlösliche Agrochemikalien, vorzugsweise Pflanzenschutzmittelwirkstoffe oder Dünger, (Wirkstoffe vom Typ (b)),
(c) 0,1 bis 99 Gew.-%, vorzugsweise 1 bis 80 Gew.-%, insbesondere 2 bis 70 Gew.-%, ganz besonders 5 bis 60 Gew.-% Alkylethersulfate mit 1 bis 9 C-Atomen in der Alkylkette und 1 bis 20 Alkylenoxyeinheiten,
(d) 0 bis 25 Gew.-%, vorzugsweise 0 bis 20 Gew.-%, insbesondere 1 bis 20 Gew.-%, ganz besonders 3-15 Gew.-% anionaktive, nichtionogene, kationaktive und/oder zwitterionische Tenside,
(e) 0 bis 95 Gew.-%, vorzugsweise 0,1 bis 90 Gew.-%, weiter bevorzugt 5 bis 85 Gew.-% Wasser, insbesondere 10 bis 60 Gew.-% Wasser und
(f) 0 bis 50 Gew.-%, vorzugsweise 0 bis 20 Gew.-%, vorzugsweise 0 bis 15 Gew.-%, weitere übliche Formulierungshilfsmittel
   enthalten.

"Gew-%" bedeutet dabei jeweils "Gewichtsprozent", d. h. das Verhältnis von Gewicht des Bestandteils und Gewicht der Zubereitung in Prozent.

Bevorzugt sind auch Formulierungen, in denen der Gehalt der Komponenten aus einer Kombination von zwei oder mehreren der bevorzugt genannten Anteile der Komponenten besteht.

Die erfindungsgemäßen flüssigen Formulierungen können nach im Prinzip üblichen Verfahren hergestellt werden, d. h. durch Vermischen der Komponenten unter Rühren, Schütteln oder mittels statischer Mischverfahren. Die erhaltenen flüssigen Formulierungen sind stabil und gut lagerfähig.

Gefunden wurde, dass auch schaumarme flüssige Adjuvantformulierungen, welche zur Herstellung der genannten konzentrierten agrochemischen Formulierungen, vorzugsweise Pflanzenschutzmittelformulierungen oder Düngemitteln, oder zur Herstellung von Tank-Mischungen mit Agrochemikalien, vorzugsweise Pflanzenschutzwirkstoffformulierungen oder Düngemitteln, verwendet werden können oder auch separat, gleichzeitig oder sequentiell mit der Applikation von Wirkstoffen (a)
dadurch gekennzeichnet, dass es sich bei Komponente (a) um einen oder mehrere Wirkstoffe aus der Gruppe Glufosinate(salze), Glyphosate(salze), Paraquat und Diquat handelt auf die Pflanzen oder auf den Boden, auf oder in dem die Pflanzen heranwachsen, appliziert werden können.

Derartige Adjuvantformulierungen sind dadurch gekennzeichnet, dass sie
(c) Alkylethersulfate mit 1 bis 9 C-Atomen in der Alkylkette und 1 bis 20 Alkylenoxyeinheiten im Ether-teil,
(d) gegebenenfalls nichtionogene, kationaktive und/oder zwitterionische Tenside,
(e) Wasser und
(f) gegebenenfalls weitere übliche Formulierungshilfsmittel
   enthalten, wobei die Komponenten (c), (d), (e), (f) wie im Falle der oben genannten Wirkstoff enthaltenden Pflanzenschutzmittelformulierungen definiert sind.

Bevorzugte flüssige Adjuvantformulierungen enthalten
(c) 0,1 bis 99,9 Gew.-%, weiter bevorzugt 0,1 bis 99 Gew.-%, vorzugsweise 1 bis 80 Gew.-%, insbesondere 2 bis 70 Gew.-%, ganz besonders 5 bis 60 Gew.-% Alkylethersulfate mit 1 bis 9 C-Atomen in der Alkylkette und 1 bis 20 Alkylenoxyeinheiten,
(d) 0 bis 50 Gew.-%, vorzugsweise 0 bis 30 Gew.-%, insbesondere 1 bis 25 Gew.-%, ganz besonders 5-20 Gew.-% anionaktive, nichtionogene, kationaktive und/oder zwitterionische Tenside,
(e) 0,1 bis 99,9 Gew.-%, weiter bevorzugt 0,1 bis 95 Gew.-%, vorzugsweise 5 bis 90 % Wasser, vorzugsweise 10 bis 75 % Wasser,
(f1) 0 bis 60 Gew.-%, vorzugsweise 0 bis 40 Gew.-%, insbesondere 0 bis 30 Gew.-% polare organische Lösungsmittel und
(f) 0 bis 20 Gew.-%, vorzugsweise 0 bis 15 Gew.-%, weitere übliche Formulierungshilfsmittel.

Die flüssigen, Wirkstoff enthaltenden Formulierungen bzw. die Adjuvantformulierungen sind schaumarm und lagerfähig. Sie weisen in der Regel bei ihrer Anwendung vielfach sehr günstige technische Eigenschaften auf. Beispielsweise zeichnen sich die Formulierungen durch geringe Schaumneigung bei Verdünnen mit Wasser aus, z. B. bei der Herstellung von Tankmischungen oder bei der Anwendung der Formulierungen im Spritzverfahren. Die Formulierungen mit Wirkstoff bzw. die Adjuvantformulierungen weisen bei der Anwendung zusammen mit den Wirkstoffen/Wirkstoffformulierungen außerdem eine vergleichsweise sehr gute biologische Wirkung aus, wenn man die Wirkung mit der Wirkung der bekannten Formulierungen mit langkettigen Alkylethersulfaten vergleicht.

Folglich eignen sich die erfindungsgemäßen Formulierungen in besonderem Maße zur Anwendung im Pflanzenschutz, bei dem die Formulierungen, gegebenenfalls nach Verdünnen mit Wasser, auf die Pflanzen, Pflanzenteile oder die Anbaufläche appliziert werden.

Im Falle von herbiziden Wirkstoffen (a)
dadurch gekennzeichnet, dass es sich bei Komponente (a) um einen oder mehrere Wirkstoffe aus der Gruppe Glufosinate(salze), Glyphosate(salze), Paraquat und Diquat handelt und (b) eignen sich die Formulierungen sehr gut zur Bekämpfung unerwünschten Pflanzenwuchses sowohl im Nichtkulturland als auch in toleranten Kulturen.

Im Falle der Anwendung von selektiven Herbiziden als Wirkstoffe vom Typ a) oder Düngemitteln können die erfindungsgemäßen Zubereitungen als schaumarme und wirkungsstarke Formulierungen in den für die Wirkstoffe üblichen monokotylen und dikotylen Kulturen alleine oder in Kombination verwendet werden, beispielsweise in wirtschaftlich bedeutenden Kulturen wie Getreide (Weizen, Gerste, Tritticale, Roggen, Reis, Mais, Hirse), Zuckerrübe, Zuckerrohr, Raps, Baumwolle, Sonnenblume, Erbsen, Bohnen und Soja. Von besonderem Interesse ist dabei die Anwendung in monokotylen Kulturen wie Getreide (Weizen, Gerste, Roggen, Triticale, Sorghum), inklusive Mais und Reis, und monokotylen Gemüsekulturen, aber auch in dikotylen Kulturen wie beispielsweise Soja, Raps, Baumwolle, Wein, Gemüsepflanzen, Obstpflanzen und Zierpflanzen.

Im Falle der Wirkstoffe a)
dadurch gekennzeichnet, dass es sich bei Komponente (a) um einen oder mehrere Wirkstoffe aus der Gruppe Glufosinate(salze), Glyphosate(salze), Paraquat und Diquat handelt können die Zubereitungen alleine oder in Kombination mit anderen Wirkstoffen a) und/oder Düngern im Nichtkulturland, Beeten von Nutz- und Zierpflanzen oder in geeigneten toleranten Kulturen verwendet werden. Dabei sind neben den erwähnten toleranten Nutzpflanzenkulturen, wie den ®LibertyLink oder ®Roundup-Ready-Kulturen, zur Produktion von Feldfrüchten auch Kulturen für Zier- und Nutzflächen, wie Rasen (turf) von Interesse. Beispielsweise eignen sich die erfindungsgemäßen Formulierungen mit Glufosinate(-ammonium) mit oder ohne Dünger für die Anwendung zur Bekämpfung von Schadpflanzen auf Zier- oder Nutzrasenflächen, speziell Weidelgras, Rispengras oder Bermudagras, vorzugsweise speziell in glufosinate-toleranten Rasenkulturen.

In den folgenden Beispielen beziehen sich Mengenangaben auf das Gewicht, sofern nichts anderes angegeben ist. Die Beispiele der Tabellen 1 und 2 betreffen erfindungsgemäße stabile Zusammensetzungen.

**Tabelle 1: Formulierungen (erfindungsgemäß)**

| Beispiel Nr. | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Wirkstoff¹⁾ [Gew.-%] | 15 | 25 | 15 | 25 | 15 | 25 | 25 | 25 | 25 | 25 | 25 | 25 | 25 | 25 |
| AES (Typ²⁾) | C9 | C9 | C8 | C8 | C7 | C7 | C6 | C6 | C5 | C5 | C4 | C3 | C2 | C1 |
| AES [Gew.-%] | 40 | 30 | 40 | 30 | 40 | 30 | 30 | 40 | 30 | 40 | 40 | 40 | 40 | 40 |
| Netzmittel³⁾ [Gew.-%] | 0 | 0 | 0 | 0 | 0 | 0 | 5 | 0 | 5 | 5 | 5 | 5 | 5 | 5 |
| org. Lsgm.⁴⁾ | 10 | 15 | 10 | 15 | 10 | 15 | 10 | 10 | 10 | 10 | 10 | 10 | 10 | 10 |
| Wasser [Gew.-%] | 35 | 30 | 35 | 30 | 35 | 30 | 30 | 25 | 30 | 20 | 20 | 20 | 20 | 20 |

| | | | | | | | | | | | | | | |
|---|---|---|---|---|---|---|---|---|---|---|---|---|---|---|
| Abkürzungen in Tabelle 1 ¹⁾ "Wirkstoff" bezeichnet den Wirkstoff Glufosinate-ammonium; ²⁾ "AES" bedeutet ein Alkylether-sulfat, wobei "C9" die Alkylkette bezeichnet, d.h. "AES Typ C9" bezeichnet ein Nonylpolyethylenglykolethersulfat-gemisch mit 1 bis 10 EO; entsprechend bezeichnet "C8", "C7", "C6", "C5", "C4", "C3", "C2", "C1" das korrespondierende Octyl-, Heptyl-, Hexyl-, Pentyl-, Butyl-, Propyl-, Ethyl- bzw. Methylpolyglykolethersulfat; ³⁾ "Netzmittel" bezeichnet das nichtionogene Netzmittel Tridecylalkoholethoxylat mit 15 EO; vergleichbare Formulierungen werden erhalten, wenn das genannte nichtionogene Netzmittel durch andere nichtionogene Netzmittel wie Alkoholalkoxylate oder Alkylglycoside ersetzt wird; alternative Formulierungen werden erhalten, wenn als Netzmittel ionogene Netzmittel wie anionisches Dialkylsulfosuccucinat oder kationische Netzmittel wie Alkylaminalkoxylate verwendet werden; ⁴⁾ "org Lsgm" bezeichnet das organische Lösungsmittel Dowanol^{®} PM (Propylenglykol-monomethylether) | | | | | | | | | | | | | | |

**Tabelle 2**

| Beispiel Nr. | 15 | 16 | 17 | 18 | 19 | 20 | 21 | 22 | 23 | 24 | 25 | 26 |
|---|---|---|---|---|---|---|---|---|---|---|---|---|
| Wirkstoff¹⁾ [Gew.-%] | 5 | 5 | 10 | 10 | 33 | 1 | 1 | 10 | 10 | 1 | 5 | 10 |
| AES (Typ²⁾) | C9 | C9 | C9 | C9 | C9 | C6 | C6 | C6 | C6 | C4 | C4 | C4 |
| AES [Gew.-%] | 25 | 2,5 | 2 | 50 | 27 | 8 | 0,5 | 5 | 50 | 4 | 40 | 40 |
| Netzmittel³⁾ [Gew.-%] | 3 | 3 | 0 | 0 | 0 | 0 | 3 | 0 | 0 | 2 | 3 | 5 |
| org. Lsgm.⁴⁾ | 5 | 5 | 10 | 10 | 0 | 0 | 0 | 10 | 10 | 5 | 5 | 10 |
| Wasser [Gew.-%] | 62 | 84,5 | 78 | 40 | 30 | 91 | 95,5 | 75 | 30 | 88 | 50 | 35 |

| | | | | | | | | | | | | |
|---|---|---|---|---|---|---|---|---|---|---|---|---|
| Abkürzungen in Tabelle 2: siehe Abkürzungen zu Tabelle 1 Schaumtest | | | | | | | | | | | | |

Die jeweilige konzentrierte flüssige Pflanzenschutzformulierung aus Tabellen 1 und 2 wurde unter Rühren auf eine 1 %ige Lösung verdünnt und das gebildete Schaumvolumen nach 1 min, 3 min und 12 min in ml Volumen bestimmt (siehe Schaumbeurteilung nach CIPAC MT 47.2). Alternativ dazu wurden die jeweiligen Additive allein bei 2 g/l gelöst und das gebildete Schaumvolumen nach 1 min, 3 min und 12 min in ml Volumen bestimmt.

Formulierungen mit Alklyethersulfaten aus Tabelle 1 und Tabelle 2 wiesen im Vergleich zu Formulierungen, worin die Alkylethersulfate durch C₁₂/C₁₄-Fettalkoholdiethylenglykolethersulfat ersetzt worden waren, eine wesentlich geringere Schaumbildung auf. Die Schaumbildung wurde praktisch verhindert, d. h. bei den Formulierungen aus Tabellen 1 und 2 trat bei der Mischung einer Menge von 0,2 bis 5 g/l Alklyethersulfat in Wasser nach 3min jeweils ein Schaumvolumen von weniger als 15ml und nach 12 min eine Schaumvolumen von 0 ml auf, während die Menge von 0,2 bis 5 g/l einer entsprechenden Formulierung mit C₁₂/C₁₄-Fettalkoholdiethylenglykolethersulfat als AES nach 3 min wie auch nach 10min ein maximales Schaumvolumen von 100 ml aufwies.

Das C₁₂/C₁₄-Fettalkoholdiethylenglykolethersulfat allein wies im Test bei 2 g/l auch nach 12min das maximale Schaumvolumen von 100 ml auf, während bei den Alkylethersulfaten aus Tabellen 1 bzw. 2 jeweils nach 12min ein Schaumvolumen von 0 ml und schon nach 3min weniger als 10ml Schaumvolumen gemessen wurde. Formulierungen mit C₁₂/C₁₄-Fettalkoholdiethylenglykolethersulfat und Entschäumem auf Siliconbasis (z. B. Rhodorsil®-Typen) wiesen in diesem Schaumtest nach 3min immer noch ein Schaumvolumen von 100 ml auf. Formulierungen mit den erfindungsgemäßen Alklyethersulfaten zeigten dagegen selbst ohne weiteren Zusatz von Entschäumem schon nach 3 min proktisch keine Schaumbildung mehr.

### Biologische Beispiele

### 1) Verwendung mit Glufosinate zur Unkrautkontrolle

Die Formulierungen gemäß Tabelle 1 wurden mit Wasser verdünnt und mit einer Wasseraufwandmenge von 200 l/ha auf Nichtkulturland appliziert, das ein unter natürlichen Bedingungen aufgelaufenes Spektrum von Schadpflanzen enthielt. Die Bewertung nach 4 Wochen ergab, daß die grünen Teile der Schadpflanzen abgestorben waren und somit eine gute Kontrolle der Schadpflanzen erreicht worden war.

### 2) Verwendung mit Glufosinate zur Unkrautkontrolle

Die Formulierungen gemäß Tabellen 1 und 2 wurden mit Wasser verdünnt, so dass eine Wasseraufwandmenge von 200-400 l/ha bei einer üblichen Aufwandmenge für Glufosinate (300-1000 g/ha) bei Applikation auf Nichtkulturland resultiert mit einem unter natürlichen Bedingungen aufgelaufenes Spektrum von mono- und dikotylen Schadpflanzen. Eine Bewertung der Wirkung nach 5 Wochen ergab, daß die grünen Teile der Schadpflanzen abgestorben waren und somit eine gute Kontrolle der Schadpflanzen erfolgte. Beispielsweise zeigten Formulierungen aus den Spalten 1 bis 8 der Tabelle 1 und den Spalten 1 bis 9 im Vergleich zu Formulierungen mit C₁₂/C₁₄-Fettalkoholdiethylenglykolethersulfat als AES bei gleichem Verhältnis an Glufosinate zu AES in der biologischen Wirkung vergleichbar gute Ergebnisse bei der Kontrolle von mono- und dikotylen Schadpflanzen.

### 3) Blattpenetration von wasserlöslichen Blattdüngern wie Harnstoff

Bei der Blattanwendung von Harnstoff (0.1 bis 2% in der Spritzbrühe) auf Blätter von monokotylen Kulturpflanzen wie Mais wie auch dikotylen Kulturpflanzen wie Apfel erhöhte sich die Geschwindigkeit der Blattaufnahme innerhalb einiger Tage bei Anwesenheit von 0.05 bis 1% eines der erfindungsgemäßen Alklyethersulfate mindestens um das doppelte.

### 4) Aufnahme von Insektiziden (nicht erfindungs gemäβ)

Bei der Blattanwendung von Chlornicotinyl-Insektiziden wie Imidacloprid wurde bei Verhältnissen von Imidacloprid zu Alkylethersulfat von 4:1 bis 1:4 z.B. bei der Blattpenetration von Apfel eine 2- bis 5-mal schnellere Aufnahme des Wirkstoffs im Vergleich zu Imidacloprid-Formulierungen ohne Alkylethersulfat (wie zum Beispiel ®Confidor SL200 oder SC350) erhalten.

## Patentansprüche

1. Schaumarme Zubereitungen von Agrochemikalien, enthaltend
(a) einen oder mehrere in Wasser lösliche oder teilweise lösliche Agrochemikalien (Wirkstoffe vom Typ (a)),
(b) gegebenenfalls einen oder mehrere in Wasser unlösliche oder weitgehend unlösliche Agrochemikalien (Wirkstoffe vom Typ (b)),
(c) Alkylethersulfate mit 1 bis 9 C-Atomen in der Alkylkette und mit 1 bis 20 Alkylenoxyeinheiten im Etherteil,
(d) gegebenenfalls anionaktive, nichtionogene, kationaktive und/oder zwitterionische Tenside,
(e) gegebenenfalls Wasser und
(f) gegebenenfalls weitere übliche Formulierungshilfsmittel
**dadurch gekennzeichnet, dass** es sich bei Komponente (a) um einen oder mehrere Wirkstoffe aus der Gruppe Glufosinate(salze), Glyphosate(salze), Paraquat und Diquat handelt.

2. Zubereitungen nach Anspruch 1, **dadurch gekennzeichnet, dass** sie
(a) 1 bis 40 Gew.-% in Wasser lösliche oder teilweise lösliche Agrochemikalien (Wirkstoffe vom Typ (a)),
(b) 0 bis 40 Gew.-% in Wasser unlösliche oder weitgehend unlösliche Agrochemikalien (Wirkstoffe vom Typ (b)),
(c) 0,1 bis 99 Gew.-% Alkylethersulfate mit 1 bis 9 C-Atomen in der Alkylkette und 1 bis 20 Alkylenoxyeinheiten,
(d) 0 bis 25 Gew.-% anionaktive, nichtionogene, kationaktive und/oder zwitterionische Tenside,
(e) 0 bis 95 Gew.-% Wasser und
(f) 0 bis 50 Gew.-% weitere übliche Formulierungshilfsmittel enthalten.

3. Zubereitungen nach Anspruch 1 oder 2, **dadurch gekennzeichnet, dass** sie
(a) 2 bis 30 Gew.-% in Wasser lösliche oder teilweise lösliche Agrochemikalien (Wirkstoffe vom Typ (a)),
(b) 0 bis 20 Gew.-% in Wasser unlösliche oder weitgehend unlösliche Agrochemikalien (Wirkstoffe vom Typ (b)),
(c) 1 bis 80 Gew.-% Alkylethersulfate mit 1 bis 9 C-Atomen in der Alkylkette und 1 bis 20 Alkylenoxyeinheiten,
(d) 0 bis 20 Gew.-% anionaktive, nichtionogene, kationaktive und/oder zwitterionische Tenside,
(e) 5 bis 85 % Wasser und
(f) 0 bis 20 Gew.-% weitere übliche Formulierungshilfsmittel enthalten.

4. Zubereitungen nach einem oder mehreren der Ansprüche 1 bis 3, **dadurch gekennzeichnet, dass** sie als Komponente (a) Glufosinate-ammonium enthalten.

5. Verfahren zur Herstellung einer nach einem der Ansprüche 1 bis 4 definierten Zubereitung, **dadurch gekennzeichnet, dass** man die Komponenten (a) bis (f) und gegebenenfalls weitere Komponenten, die in der Formulierung enthalten sind, vermischt.

6. Verwendung von Alkylethersulfaten mit mit 6 bis 8 C-Atomen im Alkylrest und 1 bis 10 Ethylenoxyeinheiten, gegebenenfalls in Kombination mit Tensiden, als schaumarme Additive zur Wirkungsverstärkung von Agrochemikalien, welche wasserlöslich oder teilweise wasserlöslich sind, wobei die Agrochemikalien ausgewählt sind aus der Gruppe, bestehend aus Glufosinate(salze), Glyphosate(salze), Paraquat und Diguat und Düngern.

7. Verwendung nach Anspruch 6, **dadurch gekennzeichnet, dass** als Agrochemikalie der Pflanzenschutzmittelwirkstoff Glufosinate-ammonium ausgewählt ist.

8. Verfahren zur Bekämpfung von unerwünschtem Pflanzenwuchs, **dadurch gekennzeichnet, daß** man eine wirksame Menge einer Zubereitung gemäß einem der Ansprüche 1 bis 4, die ein oder mehrere herbizide Wirkstoffe (a) und gegebenenfalls (b) enthält, gegebenenfalls nach Verdünnen mit Wasser, auf die Pflanzen, Pflanzenteile oder die Anbaufläche appliziert.

9. Verwendung von Zubereitungen oder Formulierungen gemäß einem der Ansprüche 1 bis 4 im Pflanzenschutz.

## Claims

1. A low-foam agrochemical preparation comprising
(a) one or more water-soluble or partially water-soluble agrochemicals (active ingredients of type (a)),
(b) if desired, one or more water-insoluble or largely water-insoluble agrochemicals (active ingredients of type (b)),
(c) alkyl ether sulfates having 1 to 9 carbon atoms in the alkyl chain and 1 to 20 alkyleneoxy units in the ether moiety,
(d) if desired, anionic, nonionic, cationic and/or zwitterionic surfactants,
(e) if desired, water and
(f) if desired, other customary formulation auxiliaries
wherein component (a) is one or more active ingredients from the group consisting of glufosinate (salts), glyphosate (salts), paraquat and diquat.

2. The preparation as claimed in claim 1, comprising
(a) from 1 to 40% by weight of water-soluble or partially water-soluble agrochemicals (active ingredients of type (a)),
(b) from 0 to 40% by weight of water-insoluble or largely water-insoluble agrochemicals (active ingredients of type (b)),
(c) from 0.1 to 99% by weight of alkyl ether sulfates having 1 to 9 carbon atoms in the alkyl chain and 1 to 20 alkyleneoxy units,
(d) from 0 to 25% by weight of anionic, nonionic, cationic and/or zwitterionic surfactants,
(e) from 0 to 95% by weight of water and
(f) from 0 to 50% by weight of other customary formulation auxiliaries.

3. The preparation as claimed in claim 1 or 2, comprising
(a) from 2 to 30% by weight of water-soluble or partially water-soluble agrochemicals (active ingredients of type (a)),
(b) from 0 to 20% by weight of water-insoluble or largely water-insoluble agrochemicals (active ingredients of type (b)),
(c) from 1 to 80% by weight of alkyl ether sulfates having 1 to 9 carbon atoms in the alkyl chain and 1 to 20 alkyleneoxy units,
(d) from 0 to 20% by weight of anionic, nonionic, Cationic and/or zwitterionic surfactants,
(e) from 5 to 85% of water and
(f) from 0 to 20% by weight of other customary formulation auxiliaries.

4. The preparation as claimed in one or more of claims 1 to 3, comprising, as component (a), glufosinate-ammonium.

5. A process for preparing a preparation as defined in any one of claims 1 to 4 which comprises mixing components (a) to (f) and, if desired, further components present in the formulation.

6. The use of alkyl ether sulfates having 6 to 8 carbon atoms in the alkyl radical and 1 to 10 ethyleneoxy units, if desired in combination with surfactants, as low-foam additive for enhancing the activity of water-soluble or partially water-soluble agrochemicals, the agrochemicals being selected from the group consisting of glufosinate (salts), glyphosate (salts), paraquat and diquat and fertilizers.

7. The use as claimed in claim 6, wherein the agrochemical selected is the active crop protectant ingredient glufosinate-ammonium.

8. A method of controlling unwanted plant growth, which comprises applying an effective amount of a preparation as claimed in any one of claims 1 to 4 which comprises one or more herbicidally active ingredients (a) and, if desired, (b), if appropriate after dilution with water, to the plants, to parts of plants or to the area under cultivation.

9. The use of preparations or formulations as claimed in any one of claims 1 to 4 in crop protection.

## Revendications

1. Préparations peu moussantes de substances agrochimiques, contenant
(a) une ou plusieurs substances agrochimiques solubles ou partiellement solubles dans l'eau (substances actives du type (a)),
(b) éventuellement une ou plusieurs substances agrochimiques insolubles ou largement insolubles dans l'eau (substances actives du type (b)),
(c) des alkyléthersulfates ayant de 1 à 9 atomes de carbone dans la chaîne alkyle et de 1 à 20 unités oxyde d'alkylène dans le fragment éther,
(d) éventuellement des tensioactifs anioniques, non ionogènes, cationiques et/ou zwitterioniques,
(e) éventuellement de l'eau et
(f) éventuellement d'autres adjuvants de formulation usuels,
**caractérisées en ce que** les composants (a) consistent en une ou plusieurs substances actives choisies dans le groupe constitué par les glufosinates (sels), les glyphosates (sels), le paraquat et le diquat.

2. Préparations selon la revendication 1, **caractérisée en ce qu'**elles contiennent
(a) 1 à 40 % en poids de substances agrochimiques solubles ou partiellement solubles dans l'eau (substances actives du type (a)),
(b) 0 à 40 % en poids de substances agrochimiques insolubles ou largement insolubles dans l'eau (substances actives du type (b)),
(c) 0,1 à 99 % en poids d'alkyléthersulfates ayant de 1 à 9 atomes de carbone dans la chaîne alkyle et de 1 à 20 unités oxyde d'alkylène,
(d) 0 à 25 % en poids de tensioactifs anioniques, non ionogènes, cationiques et/ou zwitterioniques,
(e) 0 à 95 % en poids d'eau et
(f) 0 à 50 % en poids d'autres adjuvants de formulation usuels.

3. Préparations selon la revendication 1 ou 2, **caractérisée en ce qu'**elles contiennent
(a) 2 à 30 % en poids de substances agrochimiques solubles ou partiellement solubles dans l'eau (substances actives du type (a)),
(b) 0 à 20 % en poids de substances agrochimiques insolubles ou largement insolubles dans l'eau (substances actives du type (b)),
(c) 1 à 80 % en poids d'alkyléthersulfates ayant de 1 à 9 atomes de carbone dans la chaîne alkyle et de 1 à 20 unités oxyde d'alkylène,
(d) 0 à 20 % en poids de tensioactifs anioniques, non ionogènes, cationiques et/ou zwitterioniques,
(e) 5 à 85 % en poids d'eau et
(f) 0 à 20 % en poids d'autres adjuvants de formulation usuels.

4. Préparations selon une ou plusieurs des revendications 1 à 3, **caractérisées en ce qu'**elles contiennent comme composant (a) du glufosinate-ammonium.

5. Procédé pour la fabrication d'une préparation définie selon l'une quelconque des revendications 1 à 4, **caractérisé en ce qu'**on mélange les composants (a) à (f) et éventuellement d'autres composants qui sont contenus dans la formulation.

6. Utilisation d'alkyléthersulfates ayant de 6 à 8 atomes de carbone dans le radical alkyle et de 1 à 10 unités oxyde d'éthylène, éventuellement en association avec des tensioactifs, en tant qu'additifs peu moussants, pour renforcer l'action de substances agrochimiques qui sont hydrosolubles ou partiellement hydrosolubles, les substances agrochimiques étant choisies dans le groupe constitué par les glufosinates (sels), les glyphosates (sels), le paraquat et le diquat et des fertilisants.

7. Utilisation selon la revendication 6, **caractérisée en ce que** la substance active phytosanitaire glufosinate-ammonium est choisie en tant que substance agrochimique.

8. Procédé pour la lutte contre la croissance indésirable de plantes, **caractérisé en ce qu'**on applique une quantité efficace d'une préparation selon l'une quelconque des revendications 1 à 4, qui contient une ou plusieurs substances actives herbicides (a) et éventuellement (b), éventuellement après dilution avec de l'eau, sur les plantes, parties de plantes ou la surface cultivée.

9. Utilisation de préparations ou formulations selon l'une quelconque des revendications 1 à 4 dans la protection des plantes.
